(19) Europäisches Patentamt
European Patent Office
Office européen des brevets

(11) Veröffentlichungsnummer: **0 011 600**
**B1**

(12) # EUROPÄISCHE PATENTSCHRIFT

(45) Veröffentlichungstag der Patentschrift: **14.04.82**

(51) Int. Cl.³: **C 08 G 69/26**

(21) Anmeldenummer: **79810125.9**

(22) Anmeldetag: **12.10.79**

(54) **Transparente Copolyamide und deren Verwendung zur Herstellung von Formkörpern.**

(30) Priorität: **18.10.78 CH 10774/78**

(43) Veröffentlichungstag der Anmeldung: **28.05.80 Patentblatt 80/11**

(45) Bekanntmachung des Hinweises auf die Patenterteilung: **14.04.82 Patentblatt 82/15**

(84) Benannte Vertragsstaaten: **CH DE FR GB IT NL**

(56) Entgegenhaltungen:
**EP-A1-0 001 786**
**DE-A1-2 642 244**
**DE-A1-2 846 459**
**FR-A1-2 407 229**
**GB-A-2 006 797**

(73) Patentinhaber: **CIBA-GEIGY AG, Patentabteilung Postfach, CH-4002 Basel (CH)**

(72) Erfinder: **Pfeifer, Josef, Dr., Brunnmattstrasse 32, CH-4106 Therwil (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG.

# Transparente Copolyamide und deren Verwendung zur Herstellung von Formkörpern

Gegenstand vorliegender Erfindung sind neue transparente Copolyamide sowie deren Verwendung zur Herstellung von Formkörpern.

Aus der deutschen Offenlegungsschrift Nummer 2 642 244 sind transparente Copolyamide aus cycloaliphatischen Diaminen, besonders 4,4'-Diaminodicyclohexylmethan, Isophthalsäure und aliphatischen Komponenten, wie Aminosäuren, aliphatischen Diaminen und Dicarbonsäuren bekannt. Dabei müssen diese aliphatischen Komponenten, bezogen auf je eine Amidgruppe oder je ein Paar der amidbildenden Gruppen, durchschnittlich mindestens 9 Methylengruppen aufweisen, und die Zahl der Methylengruppen zwischen den amidbildenden Gruppen muss mindestens 6 betragen. Will man mit diesen Systemen Copolyamide mit hohen Glasumwandlungstemperaturen erreichen, so erhält man spröde Produkte mit relativ hoher Wasseraufnahme. In der U.S. Patentschrift 3 597 400 sind weitere transparente Copolyamide aus 4,4'-Diaminodicyclohexylmethan, Hexamethylendiamin, Isophthalsäure und Terephthalsäure beschrieben. Diese Copolyamide nehmen sehr viel Wasser auf und ihre Glasumwandlungstemperaturen sinken nach Wasserlagerung beträchtlich ab. Schliesslich beschreibt die U.S. Patentschrift 2 696 482 transparente Polyamide aus 4,4'-Diaminodicyclohexylmethan und Isophthalsäure. Diese Polyamide weisen eine sehr hohe Schmelzviskosität und eine hohe Wasseraufnahme auf und lassen sich nur schwer in der Schmelze kondensieren oder aus der Schmelze verarbeiten.

Es wurden nun neue transparente Copolyamide aus aromatischen Dicarbonsäuren, 4,4'-Diaminodicyclohexylalkanen, aliphatischen Dicarbonsäuren und langkettigen, verzweigten Alkylendiaminen gefunden, die von den oben genannten Nachteilen frei sind.

Gegenstand der vorliegenden Erfindung ist daher ein transparentes Copolyamid, erhältlich durch Umsetzung eines Gemisches A) aus im wesentlichen stöchiometrischen Mengen eines 4,4'-Diaminodicyclohexylmethans und Isophthalsäure bzw. einem amidbildenden Derivat davon oder einem Gemisch aus Isophthalsäure und Terephthalsäure bzw. amidbildenden Derivaten davon in einem Molverhältnis Isophthalsäure(derivat): Terephthalsäure(derivat) von 5 : 5 bis 10 : 0 mit einem Gemisch B) aus im wesentlichen stöchiometrischen Mengen eines aliphatischen Diamins und einer aliphatischen Dicarbonsäure bzw. einem amidbildenden Derivat davon erhalten wird, dadurch gekennzeichnet, dass das Copolyamid eine reduzierte spezifische Viskosität von mindestens 0,5 dl/g, gemessen an einer 0,5%igen Lösung in m-Kresol bei 25°C aufweist und durch Umsetzen eines Gemisches A), worin das 4,4'-Diaminodicyclohexylmethan der Formel I

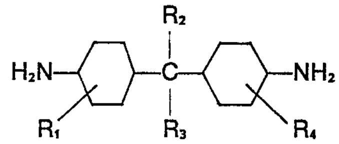

(I)

entspricht, mit einem Gemisch B), worin das aliphatische Diamin der Formel II

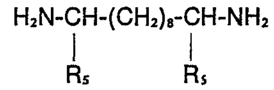

(II)

und die aliphatische Dicarbonsäure der Formel III

$$HOOC\text{-}Z\text{-}COOH \quad (III)$$

entsprechen, erhältlich ist, wobei

$R_1$ bis $R_4$ unabhängig voneinander Wasserstoff oder Alkyl mit 1-4 C-Atomen,

$R_5$ und $R_6$ unabhängig voneinander gegebenenfalls durch $C_{1-4}$-Alkyl substituiertes Cycloalkyl mit 5-12 Ring-C-Atomen, Isopropyl, sek.-Butyl, Isobutyl oder -CH($R_7$)($R_8$),

$R_7$ Wasserstoff oder Alkyl mit 2-8 C-Atomen,

$R_8$ Alkyl mit 2-8 C-Atomen und

Z Alkylen mit 4-14 C-Atomen bedeuten,

und der Anteil an Gemisch A), wenn $R_5$ und $R_6$ unabhängig voneinander gegebenenfalls durch $C_{1-4}$-Alkyl substituiertes Cycloalkyl mit 5-12 Ring-C-Atomen, Isopropyl, sek.-Butyl oder Isobutyl bedeuten, 40-60 Gewichtsprozent und, wenn $R_5$ und $R_6$ unabhängig voneinander eine Gruppe -CH($R_7$)($R_8$) bedeuten, 50-70 Gewichtsprozent beträgt und sich diese Gewichtsprozente bei amidbildenden Derivaten der Isophthalsäure, der Terephthalsäure oder einer Dicarbonsäure der Formel III auf gleiche funktionelle Gruppen beziehen.

Die erfindungsgemässen Copolyamide zeichnen sich durch hohe Glasumwandlungstemperaturen und dementsprechend hohe Wärmeformbeständigkeit, gute thermoplastische Verarbeitbarkeit, geringe Wasseraufnahme verbunden mit verminderter Abhängigkeit der mechanischen und elektrischen Eigenschaften von der Umgebungsfeuchtigkeit und verbesserte Hydrolysebeständigkeit aus. Die neuen Copolyamide behalten auch in wassergesättigtem Zustand hohe Erweichungstemperaturen bei und sind beständig gegen kochendes Wasser.

Durch $R_1$ bis $R_4$, $R_7$ oder $R_8$ dargestellte Alkylgruppen oder Alkylsubstituenten an Cycloalkylgruppen $R_5$ oder $R_6$ können geradkettig oder verzweigt sein, sind aber bevorzugt geradkettig. Beispiele derartiger Alkylgruppen sind: die Methyl-, Äthyl-, n-Propyl-, Isopropyl-, n- und sek.-Butyl-, n-Pentyl-, n-Hexyl-, n-Heptyl- und n-Octylgruppe.

Alkylgruppen $R_1$ bis $R_4$ weisen bevorzugt 1 oder 2 C-Atome auf. Besonders bevorzugt stel-

len $R_2$ und $R_3$ je Wasserstoff dar und $R_1$ und $R_4$ bedeuten je Methyl.

Sind Cycloalkylgruppen $R_5$ oder $R_6$ durch Alkylgruppen substituiert, so handelt es sich dabei vor allem um durch eine Methyl- oder Äthylgruppe substituiertes Cycloalkyl. Bevorzugt sind Cycloalkylgruppen $R_5$ und $R_6$ jedoch unsubstituiert und weisen 5-8 Ring-C-Atome auf. Besonders bevorzugt stellen $R_5$ und $R_6$ die Cyclopentyl- und vor allem die Cyclohexylgruppe dar.

$R_7$ stellt bevorzugt Wasserstoff oder Alkyl mit 2-4 C-Atomen dar, während als Alkylgruppen $R_8$ solche mit 2-6 C-Atomen bevorzugt sind.

Alkylengruppen Z können geradkettig oder verzweigt sein. Als Beispiele seien genannt: die Tetramethylen-, Pentamethylen-, Hexamethylen-, 1,3,3-Trimethyltetramethylen-, 1,1,3-Trimethyltetramethylen-, Heptamethylen-, Octamethylen-, Decamethylen-, Dodecamethylen- und Tetradecamethylengruppe. Bevorzugt sind geradkettige Alkylengruppen mit 4-10 C-Atomen, besonders die Tetramethylengruppe.

Bevorzugt sind erfindungsgemässe Copolyamide, die durch Umsetzen eines Gemisches A) aus im wesentlichen stöchiometrischen Mengen eines Diamins der Formel I und Isophthalsäure bzw. einem amidbildenden Derivat davon mit einem Gemisch B) aus im wesentlichen stöchiometrischen Mengen eines Diamins der Formel II und Adipinsäure bzw. einem amidbildenden Derivat davon erhalten werden, wobei $R_1$ bis $R_4$ unabhängig voneinander Wasserstoff oder Methyl und $R_5$ und $R_6$ je Cycloalkyl mit 5-8 Ring-C-Atomen darstellen, der Anteil an Gemisch A) 45-55 Gewichtsprozent beträgt und sich diese Gewichtsprozente bei amidbildenden Derivaten der Isophthalsäure oder der Adipinsäure auf gleiche funktionelle Gruppen beziehen, besonders Copolyamide der oben erwähnten Art, worin $R_1$ und $R_4$ je Methyl, $R_2$ und $R_3$ je Wasserstoff und $R_5$ und $R_6$ je Cyclohexyl bedeuten und der Anteil an Gemisch A) 45-50 Gewichtsprozent beträgt.

Weitere bevorzugte Copolyamide sind solche, die durch Umsetzen eines Gemisches A) aus im wesentlichen stöchiometrischen Mengen eines Diamins der Formel I und Isophthalsäure bzw. einem amidbildenden Derivat davon mit einem Gemisch B) aus im wesentlichen stöchiometrischen Mengen eines Diamins der Formel II und Adipinsäure bzw. einem amidbildenden Derivat davon erhalten werden, wobei $R_1$ bis $R_4$ unabhängig voneinander Wasserstoff oder Methyl und $R_5$ und $R_6$ je Isopropyl, Isobutyl oder sek.-Butyl darstellen, der Anteil an Gemisch A) 50-60 Gewichtsprozent beträgt und sich diese Gewichtsprozente bei amidbildenden Derivaten der Isophthalsäure oder der Adipinsäure auf gleiche funktionelle Gruppen beziehen, vor allem solche, worin $R_1$ und $R_4$ je Methyl, $R_2$ und $R_3$ je Wasserstoff und $R_5$ und $R_6$ je Isopropyl darstellen und der Anteil an Gemisch A) 50-55 Gewichtsprozent beträgt.

Schliesslich werden Copolyamide bevorzugt, die durch Umsetzen eines Gemisches A) aus im wesentlichen stöchiometrischen Mengen eines Diamins der Formel I und Isophthalsäure bzw. einem amidbildenden Derivat davon mit einem Gemisch B) aus im wesentlichen stöchiometrischen Mengen eines Diamins der Formel II und Adipinsäure oder einem amidbildenden Derivat davon erhalten werden, wobei $R_1$ bis $R_4$ unabhängig voneinander Wasserstoff oder Methyl, $R_5$ und $R_6$ je eine Gruppe $-CH(R_7)(R_8)$, $R_7$ Wasserstoff oder Alkyl mit 2-4 C-Atomen und $R_8$ Alkyl mit 2-6 C-Atomen bedeuten, der Anteil an Gemisch A) 55-68 Gewichtsprozent beträgt und sich diese Gewichtsprozente bei amidbildenden Derivaten der Isophthalsäure oder der Adipinsäure auf gleiche funktionelle Gruppen beziehen. Ganz besonders bevorzugt sind Copolyamide der letztgenannten Art, worin $R_1$ und $R_4$ je Methyl, $R_2$ und $R_3$ je Wasserstoff, $R_7$ Wasserstoff und $R_8$ n-Pentyl bedeuten und der Anteil an Gemisch A) 60-66 Gewichtsprozent beträgt.

Als amidbildende Derivate der Terephthalsäure, der Isophthalsäure oder der aliphatischen Dicarbonsäuren der Formel III können beispielsweise die entsprechenden Dihalogenide, vor allem die Dichloride, Dinitrile, Dialkyl- oder Diarylester, besonders Dialkylester mit je 1-4 C-Atomen in den Alkylteilen und Diphenylester, verwendet werden.

Die Umsetzung der definitionsgemässen Reaktionskomponenten kann nach an sich bekannten Methoden vorgenommen werden. Bevorzugt ist die Herstellung nach dem Schmelzpolykondensationsverfahren in mehreren Stufen. Dabei werden die Diamine und die Dicarbonsäuren in im wesentlichen stöchiometrischen Mengen in einem abgeschlossenen Gefäss bei Temperaturen von etwa 240 bis 290°C, gegebenenfalls unter Zusatz von Wasser, unter Inertgas vorkondensiert. Die Diamine können dabei zweckmässig in Form ihrer Salze mit den definitionsgemässen Dicarbonsäuren eingesetzt werden. Eine bevorzugte Ausführungsform sieht vor, dass man ein Diamin der Formel I und Isophthalsäure oder ein Gemisch von Iso- und Terephthalsäure als Gemisch und die Diamine der Formel II und die Dicarbonsäuren der Formel III in Form von Salzen einsetzt. Die für die Vorkondensation einzusetzenden Salze werden zweckmässig einzeln aus im wesentlichen stöchiometrischen Mengen Dicarbonsäure der Formel III und Diamin der Formel II bzw. Isophthalsäure oder eines Gemisches von Iso- und Terephthalsäure und Diamin der Formel I in geeigneten inerten organischen Lösungsmitteln hergestellt. Als inerte organische Lösungsmittel eignen sich dabei zum Beispiel cycloaliphatische Alkohole, wie Cyclopentanol und Cyclohexanol, und vor allem aliphatische Alkohole mit bis zu 6 C-Atomen, wie Methanol, Äthanol, n-Propanol, Butanole, Pentanole und Hexanole, sowie Gemische derartiger Lösungsmittel mit Wasser. Das Vorkondensat kann anschliessend bei Temperaturen zwischen etwa 260 und 300°C bei Normaldruck und in Inertgasatmosphäre bis zur Bildung der erfindungsgemässen Copolyamide weiterkondensiert werden. Unter Umständen kann es von Vorteil

sein, nach Beendigung der Polykondensation Vakuum anzulegen, um das Polyamid zu entgasen.

Gemäss einem vereinfachten Verfahren kann die vorbeschriebene Polykondensation, einschliesslich der Vorkondensation, auch drucklos durchgeführt werden, wobei man die Reaktionstemperatur im Verlaufe der Umsetzung von etwa 220 auf etwa 280°C steigert.

Die erfindungsgemässen Copolyamide können auch durch Schmelz- oder Lösungsmittelpolykondensation von Diaminen der Formel I und II mit im wesentlichen stöchiometrischen Mengen aktivierter Ester der Iso- bzw. Terephthalsäure und der Dicarbonsäuren der Formel III hergestellt werden. Als aktivierte Ester eignen sich insbesondere die entsprechenden Diphenylester. Die Reaktionstemperaturen liegen dabei im allgemeinen zwischen etwa 230 und 300°C.

Die Diamine der Formel I und die Dicarbonsäuren der Formel III sind bekannt. Die Diamine der Formel II sind ebenfalls bekannt oder können gemäss dem in der deutschen Offenlegungsschrift 2 549 403 beschriebenen Verfahren dadurch hergestellt werden, dass man in 3,12-Stellung entsprechend substituierte 1,2-Diaza-1,5,9-cyclododecatriene oder 1,2-Diaza-cyclododecene in Gegenwart eines inerten organischen Lösungsmittels katalytisch hydriert.

Die erfindungsgemässen Copolyamide haben ein glasklares Aussehen und hohe Glasumwandlungstemperaturen, lassen sich aber trotzdem sehr gut thermoplastisch verarbeiten, z.B. nach dem Spritzguss- oder Extrusionsverfahren. Sie zeichnen sich ferner durch geringe Wasseraufnahme, gute Hydrolysebeständigkeit, Transparenzbeständigkeit gegen kochendes Wasser und geringe Beeinflussung der mechanischen und elektrischen Eigenschaften unter Feuchtigkeitseinwirkung aus.

Die erfindungsgemässen Copolyamide können nach an sich bekannten Methoden zu transparenten Formkörpern verschiedenster Art verarbeitet werden, wie transparenten Geräten oder Geräteteilen.

Beispiel 1

Herstellung von Salzen aus einem Diamin der Formel II und einer Dicarbonsäure der Formel III

0,2 Mol einer Dicarbonsäure der Formel III werden in 200 ml 96%igem Äthanol bei 50°C in Lösung gebracht. Zu dieser Lösung giesst man 0,2 Mol eines Diamins der Formel II, welches ebenfalls in 200 ml 96%igem Äthanol gelöst ist. Handelt es sich dabei um ein Diamin mit kurzen Alkylgruppen in 1,10-Stellung (Isopropyl, Isobutyl) oder mit Cycloalkylgruppen in 1,10-Stellung (Cyclohexyl, Cyclooctyl), so fällt das sich bildende Salz sofort aus. Handelt es sich hingegen um ein Diamin mit längeren Alkylseitenketten in 1,10-Stellung (3-Pentyl, 3-Heptyl, n-Hexyl), so bleibt das Salz in Lösung und wird durch Zugabe von etwa 400 ml Petroläther ausgefällt. Nach dem Abkühlen auf 0-5°C filtriert man ab und trocknet das erhaltene Salz im Wasserstrahlvakuum bei 90°C. Nach dieser Methode wurden die folgenden Salze hergestellt:

| Bezeichnung | Zusammensetzung | Ausbeute (% d.Th.) |
|---|---|---|
| Salz A' | 1,10-Diamino-1,10-dicyclohexyldecan/ Adipinsäure | 94 |
| Salz B' | 1,10-Diamino-1,10-dicyclohexyldecan/ Sebacinsäure | 78 |
| Salz C | 1,10-Diamino-1,10-dicyclohexyldecan/ Dodecandisäure (1,12) | 83 |
| Salz D | 1,10-Diamino-1,10-di--isopropyldecan/ Adipinsäure | 97 |
| Salz E | 1,10-Diamino-1,10-di--isopropyldecan/ Sebacinsäure | 91 |
| Salz F | 1,10-Diamino-1,10-diisopropyldecan/ Dodecandisäure (1,12) | 85 |
| Salz G | 1,10-Diamino-1,10-dicyclooctyldecan/ Adipinsäure | 92 |
| Salz H | 1,10-Diamino-1,10-diisobutyldecan/ Adipinsäure | 98 |
| Salz I | 1,10-Diamino-1,10-di--n-hexyldecan/ Adipinsäure | 82 |
| Salz K | 1,10-Diamino-1,10-di--n-hexyldecan/ Sebacinsäure | 74 |
| Salz L | 1,10-Diamino-1,10-di--n-hexyldecan/ Dodecandisäure (1,12) | 68 |
| Salz M | 1,10-Diamino-1,10-di--(3-pentyl)-decan/ Adipinsäure | 89 |
| Salz N | 1,10-Diamino-1,10-di--(3-heptyl)-decan/ Adipinsäure | 63 |

Beispiele 2-19

In ein Bombenrohr, welches mit einem Schraubdeckel mit eingebautem Überdruckventil ausgestattet ist, werden folgende Komponenten eingewogen:

a) 4,4'-Diamino-3,3'-dimethyldicyclohexylmethan,

b) eine diesem Diamin äquivalente Menge Isophthalsäure,

c) ein Salz aus einer Dicarbonsäure der Formel III und

einem Diamin der Formel II wie in Beispiel 1 beschrieben. Nachdem die Luft im Bombenrohr vollständig durch Stickstoff oder ein anderes Inretgas verdrängt worden ist, verschliesst man das Bombenrohr und taucht es in ein Salzbad von 260°C ein. Nach 30 bis 60 Minuten ist eine glasklare Schmelze entstanden. Nach insgesamt 2 Stunden wird die Vorkondensation abgebrochen, indem man das Bombenrohr aus dem Salzbad entfernt und den Überdruck durch Öffnen des Ventils ablässt. Der Inhalt des Bombenrohres wird in ein Kondensationsgefäss gebracht und unter Durchleiten von Stickstoff bei 270°C während 6 Stunden polykondensiert, wobei das Reaktionswasser mit dem Stickstoffstrom laufend entfernt wird. Beim Abkühlen erstarrt die Schmelze zu einer glasklaren Masse.

Je 2-3 g der hergestellten Copolyamide werden in einer beheizbaren hydraulischen Presse bei 270°C zu einer ca. 0,4 bis 1 mm dicken Folie verpresst. Zur Bestimmung der Wasseraufnahme werden die Folien bei Raumtemperatur (20-25°C) einer relativen Luftfeuchtigkeit von 65% ausgesetzt, bis sich das Gleichgewicht eingestellt hat, das heisst, bis keine Gewichtszunahme mehr feststellbar ist. Je nach Dicke der Folie schwankt die dafür benötigte Zeit zwischen 10 und 60 Tagen.

In Tabelle 1 sind Zusammensetzung und Eigenschaften der Copolyamide angegeben.

Bei der Angabe der Zusammensetzung wird der Anteil Salz aus der Dicarbonsäure der Formel III und dem Diamin der Formel II in Gewichtsprozent aufgeführt, bezogen auf das Gesamtgewicht aller Einsatzkomponenten. Die Differenz zu 100 Gewichtsprozent besteht aus einem äquimolaren Gemisch von 4,4'-Diamino-3,3'-dimethyldicyclohexylmethan und Isophthalsäure.

Die reduzierte Viskosität $\eta$ red. $= \frac{\eta \text{ rel.} - 1}{c}$ basiert auf Messungen einer 0,5%igen Lösung der Copolyamide in m-Kresol bei 25°C. Die Glasumwandlungstemperaturen wurden im Differentialkalorimeter (DSC) gemessen. Bei den Werten für die Wasseraufnahme handelt es sich um Sättigungswerte bei Raumtemperatur. Die Beständigkeit der Transparenz gegenüber kochendem Wasser ist bei allen Copolyamiden sehr gut, das heisst, auch nach mehreren Tagen ist keine Beeinträchtigung der Transparenz feststellbar.

Tabelle 1

| Beispiel Nr. | Salz-zusatz | Gew.-% | $\eta$ red. dl/g | Glasumwandlungstemperatur °C | Wasseraufnahme 65% rel. Luftf. Gew.-% | Kochwasserbeständigkeit |
|---|---|---|---|---|---|---|
| 2 | Salz I | 34 | 0,79 | 173 | 2,0 | sehr gut |
| 3 | Salz I | 40 | 0,83 | 161 | 1,9 | sehr gut |
| 4 | Salz I | 44 | 0,92 | 157 | 1,8 | sehr gut |
| 5 | Salz K | 34 | 0,82 | 174 | 1,8 | sehr gut |
| 6 | Salz L | 34 | 0,84 | 173 | 1,7 | sehr gut |
| 7 | Salz A' | 50 | 0,93 | 176 | 2,0 | sehr gut |
| 8 | Salz A' | 55 | 0,86 | 169 | 1,9 | sehr gut |
| 9 | Salz B' | 46 | 0,82 | 162 | 1,4 | sehr gut |
| 10 | Salz C | 46 | 0,90 | 160 | 1,3 | sehr gut |
| 11 | Salz G | 50 | 1,08 | 171 | 1,8 | sehr gut |
| 12 | Salz G | 56 | 0,92 | 164 | 1,6 | sehr gut |
| 13 | Salz D | 50 | 0,95 | 159 | 2,0 | sehr gut |
| 14 | Salz E | 44 | 0,91 | 164 | 1,9 | sehr gut |
| 15 | Salz F | 44 | 0,97 | 162 | 1,7 | sehr gut |
| 16 | Salz H | 50 | 0,86 | 159 | 1,8 | sehr gut |
| 17 | Salz H | 42 | 0,84 | 171 | 2,1 | sehr gut |
| 18 | Salz M | 36 | 1,12 | 168 | 2,1 | sehr gut |
| 19 | Salz N | 38 | 0,75 | 167 | 1,7 | sehr gut |

Beispiel 20

In ein Kondensationsrohr werden folgende Substanzen eingewogen:

a) 1,4156 g 4,4'-Diamino-3,3'-dimethyldicyclohexylmethan

b) 0,977 g Isophthalsäure [Komponenten a) und b) zusammen = 50 Gew.-%]

c) 1,578 g 1,10-Diamino-1,10-di-(2-butyl)-decan

d) 0,794 g Adipinsäure [Komponenten c) und d) = zusammen 50 Gew.-%].

Dieses Gemisch wird unter Stickstoff auf 220°C erwärmt. Allmählich entsteht eine homogene Schmelze, und die Polykondensation schreitet unter Wasserabspaltung voran. Nach einer Stunde wird die Temperatur auf 240°C gesteigert, nach einer weiteren Stunde auf 260°C und wiederum nach einer Stunde auf 270°C. Unter Durchleiten von Stickstoff wird die Schmelze nun während 3 Stunden bei dieser Temperatur gehalten. Beim Abkühlen erstarrt die Schmelze zu einer transparenten farblosen Masse; η red. = 0,88 dl/g (gemessen an einer 0,5%igen Lösung in m-Kresol bei 25°C); Glasumwandlungstemperatur 160°C; Wasseraufnahme bei 65% relativer Luftfeuchtigkeit 1,9 Gew.-%. Die Beständigkeit gegenüber kochendem Wasser ist sehr gut.

Beispiel 21

In ein Bombenrohr werden folgende Komponenten eingewogen

a) 5,651 g 4,4'-Diamino-3,3'-dimethyldicyclohexylmethan

b) 3,94 g Isophthalsäure

c) 3,645 g 1,10-Diamino-1,10-di-n-hexyldecan

d) 2,007 g Azelainsäure

und unter den in Beispiel 2 angegebenen Bedingungen zu einem Polyamid polykondensiert.

Anschliessend wird das Polyamid bei 270°C zu einer Folie verpresst, an welcher die physikalischen Eigenschaften bestimmt werden.

Reduzierte Lösungsviskosität: 0,88 dl/g (0,5% in m-Kresol)

Glasumwandlungstemperatur: 109°C

Wasseraufnahme: 1,7 Gew.-% (bei 65% rel. Luftf.)

Kochwasserbeständigkeit: sehr gut.

Beispiel 22

Wie in Beispiel 21 beschrieben wird ein Polyamid aus folgenden Komponenten hergestellt und die physikalischen Eigenschaften ermittelt.

a) 2,403 g 2,2-Bis-(4-aminocyclohexyl)-propan

b) 1,673 g Isophthalsäure

c) 1,905 g 1,10-Diamino-1,10-di-n-hexyldecan

d) 0,816 g Adipinsäure

Reduzierte Lösungsviskosität: 0,77 dl/g (0,5% m-Kresol)

Glasumwandlungstemperatur: 163°C

Wasseraufnahme: 1,9 Gew.-% (65% rel. Luftf.)

Kochwasserbeständigkeit: sehr gut.

Die in den obigen Beispielen verwendeten Diamine der Formel II können nach dem in der deutschen Offenlegungsschrift 2 549 403 beschriebenen Verfahren durch katalytische Hydrierung von in 3,12 Stellung entsprechend substituierten 1,2-Diaza-1,5,9-cyclododecatrienen oder 1,2-Diaza-cyclododecenen erhalten werden:

1,10-Diamino-1,10-dicyclohexyldecan durch katalytische Hydrierung von 3,12-Dicyclohexyl-1,2-diaza-1,5,9-cyclododecatrien (Diastereomerengemisch); farbloses Öl [Kp. 190-193°C/7 Pa; $n_D^{20}$ = 1,4944; IR (flüssig) u.a. Banden bei 3355, 3278, 1613 $cm^{-1}$].

1,10-Diamino-1,10-di-isopropyldecan durch katalytische Hydrierung von 3,12-Diisopropyl-1,2-diaza-1,5,9-cyclododecatrien (Diastereomerengemisch); farbloses Öl [Kp. 106-109°C/1,3 Pa; $n_D^{20}$ = 1,4600; IR (flüssig) u.a. Banden bei 3355, 3278, 1613 $cm^{-1}$].

1,10-Diamino-1,10-dicyclooctyldecan durch katalytische Hydrierung von 3,12-Dicyclooctyl-1,2-diaza-1,5,9-cyclododecen; farbloses Öl [$n_D^{20}$ = 1,5050; IR (flüssig) u.a. Banden bei 3333, 3278, 1613 $cm^{-1}$].

1,10-Diamino-1,10-diisobutyldecan durch katalytische Hydrierung von 3,12-Diisobutyl-1,2-diaza-1,5,9-cyclododecatrien (Diastereomerengemisch); farbloses Öl [Kp. 168-172°C/5 Pa; $n_D^{20}$ = 1,4561; IR (flüssig) u.a. Banden bei 3289, 3205, 1600 $cm^{-1}$].

1,10-Diamino-1,10-di-n-hexyldecan durch katalytische Hydrierung von 3,12-Di-n-hexyl-1,2-diazacyclododecen (Diastereomerengemisch); farbloses Öl [Kp. 184°C/2,6-0,7 Pa; $n_D^{20}$ = 1,4624; IR (flüssig) u.a. Banden bei 3355, 3278, 1613 $cm^{-1}$].

1,10-Diamino-1,10-di-(3-pentyl)-decan durch katalytische Hydrierung von 3,12-Di-(3-pentyl)-1,2-diazacyclododecen; farbloses Öl [Kp. 141-143°C/0,5 Pa; $n_D^{20}$ = 1,4666; IR (flüssig) u.a. Banden bei 3378, 3278, 1613 $cm^{-1}$].

1,10-Diamino-1,10-di-(3-heptyl)-decan durch katalytische Hydrierung von 3,12-Di-(3-heptyl)-1,2-diazacyclododecen (Diastereomerengemisch); farbloses Öl [Kp. 170°C/1,3 Pa; $n_D^{20}$ = 1,4662; IR (flüssig) u.a. Banden bei 3278, 1613 $cm^{-1}$].

1,10-Diamino-1,10-di-(2-butyl)-decan durch katalytische Hydrierung von 3,12-Di-(2-butyl)-1,2-diaza-1,5,9-cyclododecatrien (Diastereomerengemisch); farbloses Öl [Kp. 143-145°C/7 Pa; $n_D^{20}$ = 1,4639; IR (flüssig) u.a. Banden bei 3330, 1626 $cm^{-1}$].

Die Herstellung der 1,2-Diaza-1,5,9-cyclododecatriene bzw. 1,2-Diaza-cyclododecene kann nach den in den deutschen Offenlegungsschriften 2 330 087 und 2 549 403 beschriebenen Methoden vorgenommen werden.

## Patentansprüche

1. Ein transparentes Copolyamid, erhältlich durch Umsetzung eines Gemisches A) aus im wesentlichen stöchiometrischen Mengen eines 4,4'-Diaminodicyclohexylmethans und Isophthalsäure bzw. einem amidbildenden Derivat davon oder einem Gemisch aus Isophthalsäure und Terephthalsäure bzw. amidbildenden Derivaten davon in einem Molverhältnis Isophthalsäure(derivat): Terephthalsäure(derivat) von 5 : 5 bis

10 : 0 mit einem Gemisch B) aus im wesentlichen stöchiometrischen Mengen eines aliphatischen Diamins und einer aliphatischen Dicarbonsäure bzw. einem amidbildenden Derivat davon, dadurch gekennzeichnet, dass das Copolyamid eine reduzierte spezifische Viskosität von mindestens 0,5 dl/g, gemessen an einer 0,5%igen Lösung in m-Kresol bei 25°C aufweist und durch Umsetzen eines Gemisches A), worin das 4,4'-Diaminodicyclohexylmethan der Formel

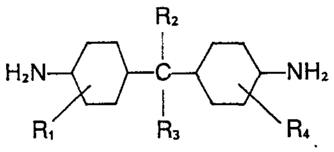

(I)

entspricht, mit einem Gemisch B), worin das aliphatische Diamin der Formel II

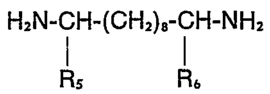

(II)

und die aliphatische Dicarbonsäure der Formel III

HOOC-Z-COOH (III)

entsprechen, erhältlich ist, wobei

$R_1$ bis $R_4$ unabhängig voneinander Wasserstoff oder Alkyl mit 1-4 C-Atomen,

$R_5$ und $R_6$ unabhängig voneinander gegebenenfalls durch $C_{1-4}$-Alkyl substituiertes Cycloalkyl mit 5-12 Ring-C-Atomen, Isopropyl, sek.-Butyl, Isobutyl oder $-CH(R_7)(R_8)$,

$R_7$ Wasserstoff oder Alkyl mit 2-8 C-Atomen,

$R_8$ Alkyl mit 2-8 C-Atomen und

Z Alkylen mit 4-14 C-Atomen bedeuten,

und der Anteil an Gemisch A), wenn $R_5$ und $R_6$ unabhängig voneinander gegebenenfalls durch $C_{1-4}$-Alkyl substituiertes Cycloalkyl mit 5-12 Ring-C-Atomen, Isopropyl, sek.-Butyl oder Isobutyl bedeuten, 40-60 Gewichtsprozent und, wenn $R_5$ und $R_6$ unabhängig voneinander eine Gruppe $-CH(R_7)(R_8)$ bedeuten, 50-70 Gewichtsprozent beträgt und sich diese Gewichtsprozente bei amidbildenden Derivaten der Isophthalsäure, der Terephthalsäure oder einer Dicarbonsäure der Formel III auf gleiche funktionelle Gruppen beziehen.

2. Ein transparentes Copolyamid nach Anspruch 1, das durch Umsetzen eines Gemisches A) aus im wesentlichen stöchiometrischen Mengen eines Diamins der Formel I und Isophthalsäure bzw. einem amidbildenden Derivat davon mit einem Gemisch B) aus im wesentlichen stöchiometrischen Mengen eines Diamins der Formel II und Adipinsäure bzw. einem amidbildenden Derivat davon erhalten wird, wobei $R_1$ bis $R_4$ unabhängig voneinander Wasserstoff oder Methyl und $R_5$ und $R_6$ je Cycloalkyl mit 5-8 Ring-C-Atomen darstellen, der Anteil an Gemisch A) 45-55 Gewichtsprozent beträgt und sich diese Gewichtsprozente bei amidbildenden Derivaten der Isophthalsäure oder der Adipinsäure auf gleiche funktionelle Gruppen beziehen.

3. Ein transparentes Copolyamid nach Anspruch 1, das durch Umsetzen eines Gemisches A) aus im wesentlichen stöchiometrischen Mengen eines Diamins der Formel I und Isophthalsäure bzw. einem amidbildenden Derivat davon mit einem Gemisch B) aus im wesentlichen stöchiometrischen Mengen eines Diamins der Formel II und Adipinsäure bzw. einem amidbildenden Derivat davon erhalten wird, wobei $R_1$ bis $R_4$ unabhängig voneinander Wasserstoff oder Methyl und $R_5$ und $R_6$ je Isopropyl, Isobutyl oder sek.-Butyl darstellen, der Anteil an Gemisch A) 50-60 Gewichtsprozent beträgt und sich diese Gewichtsprozente bei amidbildenden Derivaten der Isophthalsäure oder der Adipinsäure auf gleiche funktionelle Gruppen beziehen.

4. Ein transparentes Copolyamid nach Anspruch 1, das durch Umsetzen eines Gemisches A) aus im wesentlichen stöchiometrischen Mengen eines Diamins der Formel I und Isophthalsäure bzw. einem amidbildenden Derivat davon mit einem Gemisch B) aus im wesentlichen stöchiometrischen Mengen eines Diamins der Formel II und Adipinsäure oder einem amidbildenden Derivat davon erhalten wird, wobei $R_1$ bis $R_4$ unabhängig voneinander Wasserstoff oder Methyl, $R_5$ und $R_6$ je eine Gruppe $-CH(R_7)(R_8)$, $R_7$ Wasserstoff oder Alkyl mit 2-4 C-Atomen und $R_8$ Alkyl mit 2-6 C-Atomen bedeuten, der Anteil an Gemisch A) 55-68 Gewichtsprozent beträgt und sich diese Gewichtsprozente bei amidbildenden Derivaten der Isophthalsäure oder der Adipinsäure auf gleiche funktionelle Gruppen beziehen.

5. Ein transparentes Copolyamid nach Anspruch 2, worin $R_1$ und $R_4$ je Methyl, $R_2$ und $R_3$ je Wasserstoff, $R_5$ und $R_6$ je Cyclohexyl bedeuten und der Anteil an Gemisch A) 45-50 Gewichtsprozent beträgt.

6. Ein transparentes Copolyamid nach Anspruch 3, worin $R_1$ und $R_4$ je Methyl, $R_2$ und $R_3$ je Wasserstoff und $R_5$ und $R_6$ je Isopropyl bedeuten und der Anteil an Gemisch A) 50-55 Gewichtsprozent beträgt.

7. Ein transparentes Copolyamid nach Anspruch 4, worin $R_1$ und $R_4$ je Methyl, $R_2$ und $R_3$ je Wasserstoff, $R_7$ Wasserstoff und $R_8$ n-Pentyl bedeuten und der Anteil an Gemisch A) 60-66 Gewichtsprozent beträgt.

8. Verwendung eines Copolyamids nach Anspruch 1 zur Herstellung von Formkörpern.

## Claims

1. A transparent copolyamide, obtainable by reaction of a mixture A) consisting of essentially stoichiometric amounts of a 4,4'-diaminodicyclohexylmethane and isophthalic acid, or an amide-forming derivative thereof, or a mixture of isophthalic acid and terephthalic acid, or amide-forming derivatives thereof, in a molar ratio of isophthalic acid (derivative) : terephthalic acid (derivative) of 5 : 5 to 10 : 0, with a mixture B) consisting of essentially stoichiometric amounts of an aliphatic diamine and an aliphatic dicarboxylic acid, or an amide-forming derivative thereof, characterised in that the copolyamide has a reduced specific viscosity of at least 0.5 dl/g, measured on a 0.5% solution in m-cresol at 25°C, and is obtained by reaction of a mixture A), wherein the 4,4'-diaminodicyclohexylmethane corresponds to the formula

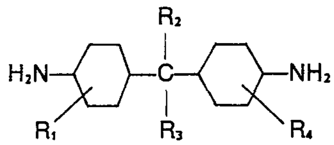 (I)

with a mixture B), wherein the aliphatic diamine corresponds to the formula II

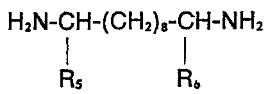 (II)

and the aliphatic dicarboxylic acid to the formula III

HOOC-Z-COOH (III)

wherein

$R_1$ to $R_4$ independently of one another are each hydrogen or alkyl having 1-4 C atoms,

$R_5$ and $R_6$ independently of one another are each cycloalkyl which has 5-12 ring C atoms and which is unsubstituted or substituted by $C_1$-$C_4$-alkyl, or they are each isopropyl, sec-butyl, isobutyl or $-CH(R_7)(R_8)$,

$R_7$ is hydrogen or alkyl having 2-8 C atoms,

$R_8$ is alkyl having 2-8 carbon atoms, and

Z is alkylene having 4-14 C atoms,

and that the proportion of mixture A) when $R_5$ and $R_6$ independently of one another are each cycloalkyl which has 5-12 ring C-atoms and which is unsubstituted or substituted by $C_1$-$C_4$-alkyl, or are each isopropyl, sec-butyl or isobutyl, is 40-60 per cent by weight, and when $R_5$ and $R_6$ independently of one another are each a group $-CH(R_7)(R_8)$ it is 50-70 per cent by weight, these weight percentages in the case of amide-forming derivatives of isophthalic acid, of terephthalic acid or of a dicarboxylic acid of the formula III relating to identical functional groups.

2. A transparent copolyamide according to claim 1 which is obtained by reaction of a mixture A) consisting of essentially stoichiometric amounts of a diamine of the formula I and isophthalic acid, or an amide-forming derivative thereof, with a mixture B) consisting of essentially stoichiometric amounts of a diamine of the formula II and adipic acid, or an amide-forming derivative thereof, wherein $R_1$ to $R_4$ independently of one another are each hydrogen or methyl, and $R_5$ and $R_6$ are each cycloalkyl having 5-8 ring C atoms, and wherein the proportion of mixture A) is 45-55 per cent by weight, these weight percentages in the case of amide-forming derivatives of isophthalic acid or of adipic acid relating to identical functional groups.

3. A transparent copolyamide according to claim 1 which is obtained by reaction of a mixture A) consisting of essentially stoichiometric amounts of a diamine of the formula I and isophthalic acid, or an amide-forming derivative thereof, with a mixture B) consisting of essentially stoichiometric amounts of a diamine of the formula II and adipic acid, or an amide-forming derivative thereof, wherein $R_1$ to $R_4$ independently of one another are each hydrogen or methyl, and $R_5$ and $R_6$ are each isopropyl, isobutyl or sec-butyl, and wherein the proportion of mixture A) is 50-60 percent by weight, these weight percentages in the case of amide-forming derivatives of isophthalic acid or of adipic acid relating to identical functional groups.

4. A transparent copolyamide according to claim 1 which is obtained by reaction of a mixture A) consisting of essentially stoichiometric amounts of a diamine of the formula I and isophthalic acid, or an amide-forming derivative thereof, with a mixture B) consisting of essentially stoichiometric amounts of a diamine of the formula II and adipic acid, or an amide-forming derivative thereof, wherein $R_1$ to $R_4$ independenly of one another are each hydrogen or methyl, $R_5$ and $R_6$ are each a group $-CH(R_7)(R_8)$, $R_7$ is hydrogen or alkyl having 2-4 C atoms and $R_8$ is alkyl having 2-6 C atoms, and wherein the proportion of mixture A) is 55-68 per cent by weight, these weight percentages in the case of amide-forming derivatives of isophthalic acid or of adipic acid relating to identical functional groups.

5. A transparent copolyamide according to claim 2 wherein $R_1$ and $R_4$ are each methyl, $R_2$ and $R_3$ are each hydrogen, $R_5$ and $R_6$ are each cyclohexyl, and wherein the proportion of mixture A) is 45-50 per cent by weight.

6. A transparent copolyamide according to claim 3, wherein $R_1$ and $R_4$ are each methyl, $R_2$ and $R_3$ are each hydrogen, and $R_5$ and $R_6$ are each isopropyl, and wherein the proportion of mixture A) is 50-55 per cent by weight.

7. A transparent copolyamide according to claim 4, wherein $R_1$ and $R_4$ are each methyl, $R_2$ and $R_3$ are each hydrogen, $R_7$ is hydrogen, and $R_8$ is n-pentyl, and wherein the proportion of mixture A) is 60-66 per cent by weight.

8. Use of a copolyamide according to claim 1 for producing moulded articles.

**Revendications**

1. Copolyamide transparent pouvant être obtenu par réaction d'un mélange A) constitué de quantités à peu près stoechiométriques d'un diamino-4,4'-dicyclohexyl-méthane et d'acide isophtalique, ou d'un dérivé amidogène de celui-ci, ou d'un mélange d'acide isophtalique et d'acide téréphtalique ou de dérivés amidogènes de ces acides dans un rapport molaire acide isophtalique (ou derivé) : acide téréphtalique (ou dérivé) compris entre 5 : 5 et 10 : 0,

avec un mélange B) constitué de quantités à peu près stoechiométriques d'une diamine aliphatique et d'un acide dicarboxylique aliphatique, ou d'un dérivé amidogène d'un tel acide, copolyamide caractérisé en ce qu'il a une viscosité spécifique réduite d'au moins 0,5 dl/g, mesurée à 25°C sur une solution à 0,5% dans du m-crésol, en ce qu'il a été obtenu par réaction d'un mélange A) dans lequel le diamino-4,4'-dicyclohexyl-méthane répond à la formule I

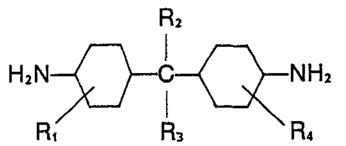

(I)

avec un mélange B) dans lequel la diamine aliphatique répond à la formule II

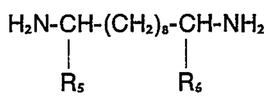

(II)

et l'acide dicarboxylique aliphatique répond à la formule III

HOOC-Z-COOH (III)

formules dans lesquelles:

$R_1$ à $R_4$ représentent chacun, indépendamment les uns des autres, l'hydrogène ou un alkyle contenant de 1 à 4 atomes de carbone,

$R_5$ et $R_6$ représentent chacun, indépendamment l'un de l'autre, un radical cycloalkyle contenant de 5 à 12 atomes de carbone dans son cycle et éventuellement porteur d'un alkyle en C1-C4, un isopropyle, un sec-butyle, un isobutyle ou un radical $-CH(R_7)(R_8)$,

$R_7$ représente l'hydrogène ou un alkyle en C2-C8,

$R_8$ représente un alkyle en C2-C8, et

Z représente un alkylène en C4-C14,

et en ce que la proportion du mélange A), dans le cas où $R_5$ et $R_6$ représentent chacun, indépendamment l'un de l'autre, un radical cycloalkyle contenant de 5 à 12 atomes de carbone dans son cycle et éventuellement porteur d'un alkyle en C1-C4, un radical sec-butyle ou un radical isobutyle, est de 40 à 60% en poids et, lorsque $R_5$ et $R_6$ représentent chacun, indépendamment l'un de l'autre, un radical $-CH(R_7)(R_8)$, est de 50 à 70% en poids, ces pourcentages pondéraux, dans le cas de dérivés amidogènes de l'acide isophtalique, de l'acide téréphtalique ou d'un acide dicarboxylique de formule (III), se rapportant à des groupes fonctionnels identiques.

2. Copolyamide transparent selon la revendication 1, qui à été obtenu par réaction d'un mélange A) constitué de quantités à peu près stoechiométriques d'une diamine de formule (I) et d'acide isophtalique, ou d'un dérivé amidogène de cet acide, avec un mélange B) constitué de quantités à peu près stoechiométriques d'une diamine de formule (II) et d'acide adipique, ou d'un dérivé amidogène de celui-ci, formules dans lesquelles $R_1$ à $R_4$ représentent chacun, indépendamment les uns des autres, l'hydrogène ou un méthyle et $R_5$ et $R_6$ représentent chacun un cycloalkyle contenant de 5 à 8 atomes de carbone dans son cycle, la proportion du mélange A) étant comprise entre 45 et 55% en poids, ce pourcentage pondéral, dans le cas de dérivés amidogènes de l'acide isophtalique ou de l'acide adipique, se rapportant à des groupes fonctionnels identiques.

3. Copolyamide transparent selon la revendication 1, qui a été obtenu par réaction d'un mélange A) constitué de quantités à peu près stoechiométriques d'une diamine de formule (I) et d'acide isophtalique, ou d'un dérivé amidogène de celui-ci, avec un mélange B) constitué de quantités à peu près stoechiométriques d'une diamine de formule (II) et d'acide adipique, ou d'un dérivé amidogène de celui-ci, formules dans lesquelles $R_1$ à $R_4$ représentent chacun, indépendamment les uns des autres, l'hydrogène ou un méthyle et $R_5$ et $R_6$ représentent chacun un radical isopropyle, isobutyle ou sec-butyle, la proportion du mélange A) étant de 50 à 60% en poids et ce pourcentage pondéral se rapportant, dans le cas de dérivés amidogènes de l'acide isophtalique ou de l'acide adipique, à des groupes fonctionnels identiques.

4. Copolyamide transparent selon la revendication 1, qui a été obtenu par réaction d'un mélange A) constitué de quantités à peu près stoechiométriques d'une diamine de formule (I) et d'acide isophtalique, ou d'un dérivé amidogène de celui-ci, avec un mélange B) constitué de quantités à peu près stoechiométriques d'une diamine de formule (II) et d'acide adipique, ou d'un dérivé amidogène de celui-ci, formules dans lesquelles $R_1$ à $R_4$ représentent chacun, indépendamment les uns des autres, l'hydrogène ou un méthyle, $R_5$ et $R_6$ représentent chacun un radical $-CH(R_7)(R_8)$, $R_7$ représente l'hydrogène ou un alkyle en C2-C4 et $R_8$ représente un alkyle en C2-C6, la proportion du mélange A) étant de 55 à 68% en poids et ce pourcentage pondéral se rapportant, dans le cas de dérivés amidogènes de l'acide isophtalique ou de l'acide adipique, à des groupes fonctionnels identiques.

5. Copolyamide transparent selon la revendication 2, dans lequel $R_1$ et $R_4$ représentent chacun un méthyle, $R_2$ et $R_3$ chacun l'hydrogène, $R_5$ et $R_6$ chacun un cyclohexyle, et la proportion du mélange A) est de 45 à 50% en poids.

6. Copolyamide transparent selon la revendication 3, dans lequel $R_1$ et $R_4$ représentent chacun un méthyle, $R_2$ et $R_3$ chacun l'hydrogène et $R_5$ et $R_6$ chacun un isopropyle, et la proportion du mélange A) est de 50 à 55% en poids.

7. Copolyamide transparent selon la revendication 4, dans lequel $R_1$ et $R_4$ représentent chacun un méthyle, $R_2$ et $R_3$ chacun l'hydrogène, $R_7$ représente l'hydrogène et $R_8$ un n-pentyle, et la proportion du mélange A) est de 60 à 66% en poids.

8. Application d'un copolyamide selon la revendication 1 à la fabrication d'objets moulés.